Europäisches Patentamt

European Patent Office

Office européen des brevets

(19)

(11) EP 0 766 174 B1

(12) EUROPEAN PATENT SPECIFICATION

(45) Date of publication and mention
of the grant of the patent:
**22.05.2002 Bulletin 2002/21**

(51) Int Cl.7: **G06F 11/10**

(21) Application number: **95830408.1**

(22) Date of filing: **29.09.1995**

(54) **Memory device having improved yield and reliability**

Speicheranordnung mit verbessertem Ergebnis und verbesserter Zuverlässigkeit

Dispositif de mémoire avec accroissement de la rendement et de la fiabilité

(84) Designated Contracting States:
**DE FR GB IT**

(43) Date of publication of application:
**02.04.1997 Bulletin 1997/14**

(73) Proprietor: **STMicroelectronics S.r.l.**
**20041 Agrate Brianza (Milano) (IT)**

(72) Inventors:
• **Branchetti, Maurizio**
**I-42020 San Polo D'Enza (Reggio Emilia) (IT)**
• **Golla, Carla**
**I-20099 Sesto San Giovanni (Milano) (IT)**
• **Campardo, Giovanni**
**I-24100 Bergamo (IT)**

(74) Representative: **Cerbaro, Elena, Dr. et al**
**STUDIO TORTA S.r.l.,**
**Via Viotti, 9**
**10121 Torino (IT)**

(56) References cited:
**EP-A- 0 141 743          EP-A- 0 381 405**
**US-A- 4 612 640          US-A- 5 056 095**
**US-A- 5 063 565**

**Description**

The present invention relates to a memory device and in particular the EEPROM flash type with improved output and reliability.

As known, the main problems encountered in the production of a flash EEPROM memory device concern production process output and reliability of the final product.

By the term 'yield' is indicated a parameter which specifies quantitatively the number of memory devices produced which operate in a manner conforming to design specifications when subjected to electrical testing.

The causes which lead to less yield of memory devices are mainly defects in the so-called cell array comprising a plurality of memory cells in which are stored binary data.

This matrix occupies a large part of the area of the integrated memory device.

The defects which decrease the yield of the device can be divided in two main classes:

- defects due to pairs of rows included in the cell array whose metallizations are short-circuited among them, and

- defects due to individual cells having electrical characteristics incompatible with those necessary to have correct operation of the device containing them.

To remedy the malfunctions caused by the defects belonging to the first class there is used the so-called 'row redundancy', which uses supplementary rows inside the cell array.

To remedy the malfunctions caused by the defects belonging to the second class there is used the so-called 'column redundancy', which uses supplementary columns inside the above mentioned array.

The principle on which is based row and column redundancy is essentially the same, i.e. replacement of the damaged element by a corresponding redundant element.

The 'replacement' takes place by using a logical circuitry having a great variety of different diagrams which are considerably affected by the decisions made concerning the architecture of the entire device.

Although advantageous in some ways, row and column redundancy has a serious shortcoming due to the every greater complexity of the logical networks which manage them as the size of memory devices increases.

The reasons for this are understandable when it is recalled that selection of a redundant element must be done by comparing row and column address signals supplied at input to the device with row and column address signals memorized in a special register within the device.

The latter signals correspond to the locations of the rows or columns of the array which it is intended to replace.

To obviate the same type of defects which are presently remedied through the use of column redundancy there can be used the so-called error correction codes.

In this case, if p indicates the probability that an individual memory cell will be defective it is possible to plot a curve representing the behavior of the probability of the events not reparable for a device containing this cell, as a function of the parameter p.

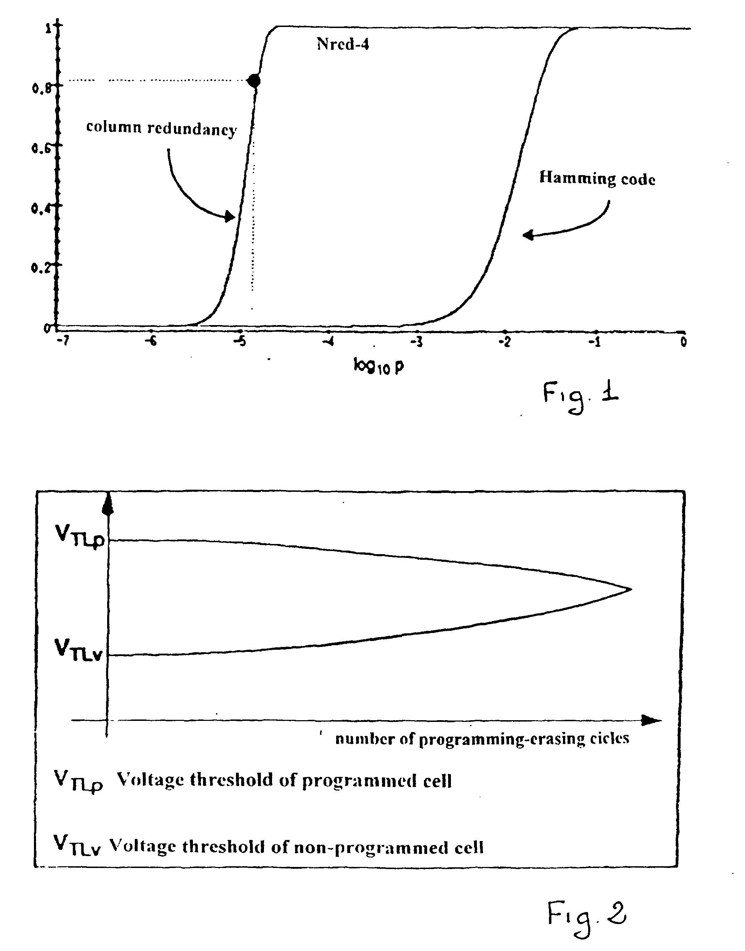

In FIG. 1, for example, are shown two curves representing the behavior of the probability of the irreparable events for a memory device.

The first curve was obtained by utilizing a redundancy system using four additional columns for each memory block comprising $2^{10}$ rows and $2^{10}$ columns.

The second curve was obtained utilizing an error correction code of the so-called Hamming type with $2^7$ bits of user data and $2^3$ bits of parity control capable of correcting an individual error.

It is specified that point A shown in FIG. 1 relates to a situation in which the value of the probability p is approximately $0.8*10^{-5}$.

To a probability of this value corresponds a yield of 20% produced by the column redundancy while the yield obtainable utilizing the error correction code is practically 100%.

It is appropriate to state that this comparison is correct if the assumption of defects uniformly distributed on the cell array is correct.

It is also true that the term 'reliability' indicates the ability of a device to remain in conformity with the design specifications in time.

In the case of flash EEPROM memory devices reliability is particularly important because these devices must be able to keep the binary data stored in them whole over long periods of time.

At the same time it must be possible to perform an adequate number of write and delete operations on the cells.

It is also appropriate to recall that the memory cell comprises an individual floating-gate MOS transistor of which it is possible to control the threshold voltage by injection of charges through a gate oxide.

On the basis of the above remarks it is understandable how over time there will be dispersion of the characteristics of the memory cell and hence increase in the probability of committing errors by the device.

Indeed, the currents traversing the gate oxide produce the effect of worsening its dielectric characteristics with the result that the size of the interval separating the threshold voltage of a programmed cell from that of an unprogrammed cell tends to diminish.

In practice, the situation found is the type shown in FIG. 2.

In this FIG. are shown the behaviors of the threshold voltages ($V_{TLP}$ and $V_{TLV}$) respectively of a programmed cell and an unprogrammed cell as a function of the number of deletion-programming cycles to which the memory device was subjected.

It is specified that the point of intersection B between the two behavior curves corresponds to the number of deletion-programming cycles beyond which the programmed memory cell loses its ability to be used as a memorization element.

Point B corresponds therefore to the limit of usability of the memory devices in which is included this cell.

An aspect which it is appropriate to recall concerns distribution of the memory cells which lose their data storage ability in the array.

Indeed, it has been found that this distribution is uniform with good approximation.

This is coherent with the interpretation which can be given of the aging process of the gate oxides produced by the current transport phenomena.

An error correction code acting downstream of the circuits which read the data in the memory devices is capable of remedying this situation within the limits of the protection ability given it during design and is thus usable for increasing the reliability of the device.

A memory device according to the preamble of claims 1 and 6 is disclosed in US-A-5,063,565 which has a service processor including a local memory. The service processor performs error correction to write corrected data in the data memory after discovering an error.

Further memories including error correction solutions are disclosed in EP-A-0 381 405, US-A-5,056,095 and US-A.4,612,640.

The technical problem underlying the present invention is to provide a memory devices having high yield and reliability.

The technical problem is solved by a device of the type indicated above and defined in independent claim 1. Further enhancements are provided by the subclaims 2 to 5. A corresponding method is defined in independent claim 6.

The characteristics and advantages of the device in accordance with the present invention are set forth in the description of an embodiment thereof given below by way of non-limiting example with reference to the annexed drawings.

In the drawings:

FIGS. 1 and 2 show the behavior of characteristic magnitudes of a memory devices, and

FIG. 3 shows a block diagram of a memory device provided in accordance with the present invention.

With reference to the FIGS., FIG. 1 indicates schematically as a whole a memory device with improved yield and reliability and provided in accordance with the present invention.

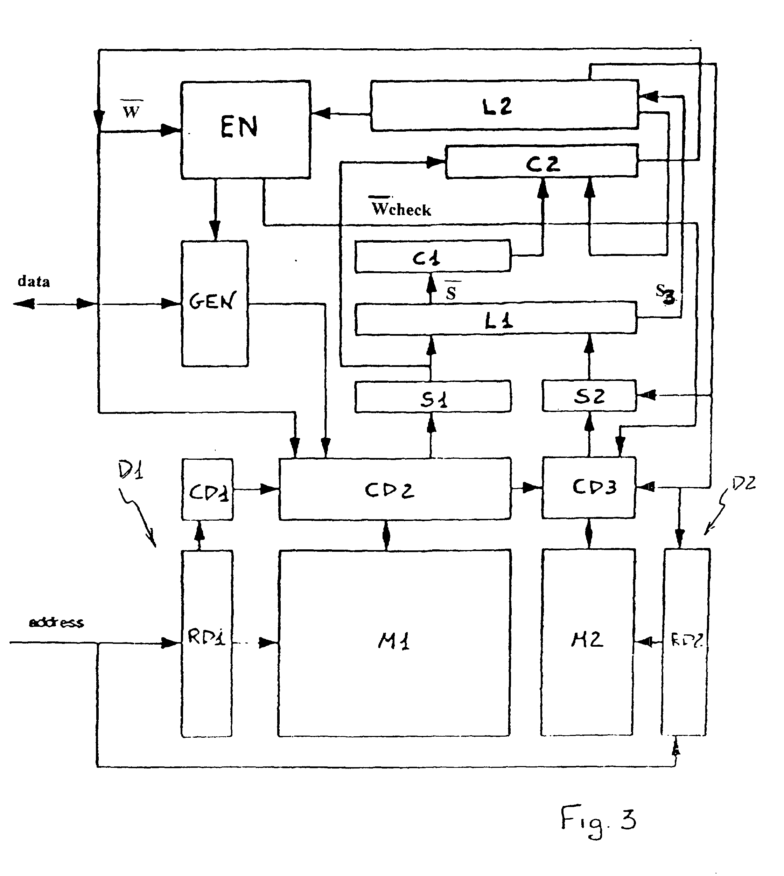

With reference to FIG. 3 the memory device comprises at least one first cell array M1 and one second cell array M2 organized in rows and columns.

In these first arrays M1 and M2 are stored respectively a first plurality of user data organized in memory words comprising e.g. 4 bits and a second plurality of identification and error correction data organized in memory words comprising e.g. 3 bits while each bit is memorized in a different memory cell.

With each user data word is associated an identification and error correction word.

These first and second cell arrays M1 and M2 respectively are connected to first and second decoding means D1 and D2 respectively which select the individual memory cells on the basis of row and column address signals which they receive at input.

Specifically the first decoder means D1 comprise a first row address signal decoder circuit RD1 and a first and second column address signal decoder circuits CD1 and CD2 respectively.

The second decoder means D2 comprise a second row signal address decoder circuit RD2 and a third column signal address decoder circuit CD3.

The first decoder means D1 are also connected to a signal generator GEN which receives at input the user data and generates at output parity bits which are associated each with an individual memory word included in the first array M1.

These parity bits have the purpose of allowing detection of an individual error which could occur in the user data word.

The first D1 and second D2 decoder means are also cascade connected respectively to a first S1 and a second S2 sense amplifier designed to amplify and read the bits stored in the memory cells selected by the decoder means.

In turn, the first S1 and second S2 sense amplifiers are cascade connected to a parity control circuit L1.

Again with reference to FIG. 3 the memory device comprises also a first C1 and a second C2 error correction code cascade connected together and to the parity control block L1.

The second error correction circuit C2 is also equipped with a first input terminal connected to an output terminal of the first sense amplifier S1.

In the memory device is also included at least one logical control unit L2 having at least one input terminal and at least one first, one second and one third output terminals.

Specifically the first input terminal of the logic unit L2 is connected to an output terminal of the parity control block L1.

The first and second output terminals of the logical control unit L2 are connected respectively to a second input terminal of the error correction circuit C2 and to inputs of the second decoder means D2.

Lastly the memory device comprises a coder circuit EN capable of generating an error correction code and having a first and a second input terminals and a first and second output terminals.

The first and second input terminals of the coder circuit EN are connected respectively to the third output terminal of the logical control unit L2 and to an output terminal of the error correction circuit C2.

The first and second output terminals of this coder circuit EN are connected respectively to an input terminal of the signal generator circuit GEN and to another input terminal of the second decoder means D2.

There is now described operation of the memory device in accordance with the present invention with reference to an initial state in which the logical control unit L2 keeps disabled the coder circuit EN, the second error correction circuit C2, the second decoder means D2 and the second sense amplifier S2, whose outputs must remain constantly at low logical level to avoid altering the parity control done by the block L1.

In this manner the cells included in the second array M2 are protected from all those gate and drain stress phenomena which alter their functionality.

It is also specified that during memorization in the first array M1 of the parity bit supplied by the generator GEN the inputs of the coder circuit EN must all be kept at low logic level so as not to influence the generator.

During reading of the memory device the parity control block L1 provides only for parity control.

If the parity is respected this block generates a digital signal S3 which is at low logical level.

In this case the logical control unit L2 continues to keep disabled the coder circuit EN, the second correction circuit C2, the second decoder means D2 and the second sense amplifier S2.

When an individual error is verified the parity of the memory word which is read at that moment is violated and the digital signal S3 goes to a high logic level.

This transition is received by the logical control unit L2 which thenceforth activates the portion of the memory device designed to perform error correction.

Once this portion has been activated the digital signal S3 assumes the meaning of double-error detector, meaning that it derives from the structure of the error correction code used and which responds to a logic of the type illustrated below.

It is specified that the problem of recovering the memory word which first exhibited an error can be solved only outside the memory device because the data memorized up to occurrence of the error are only sufficient for detection of the error.

Concerning the error correction code to use, a reasonable compromise between protective ability of the memory device and incidence of the parity bits can be found by choosing e.g. a code of the so-called Hamming type.

This code uses 136-bit memory words of which 128 are user bits and 8 are parity bits and is capable of correcting individual errors.

In the device described here this code is used to complete in succession the two operations of detection and correction of the errors, having memorized initially together with each user data word a parity control digital signal allowing detection of individual errors.

In this manner all the memory cells included in the second array M2 are protected from aging. Indeed, these cells are employed only after an individual error has been detected.

When the first individual error has occurred the parity control digital signal together with the other error identification and correction digital signals serves as a double-error detector.

This can be extremely useful for having data on the time interval beyond which the memory device loses its reliability characteristics.

To better clarify the above remarks it is appropriate to analyze a numerical example having recourse to the Hamming code C(7.4) where 7 is the length of the complete memory word (excluding the parity control digital signal) and 4 is the length of the user data word.

This code is represented by a generating matrix G and a parity matrix H as follows.

$$G = \begin{bmatrix} 1 & 1 & 0 & 1 & 0 & 0 & 0 \\ 0 & 1 & 1 & 0 & 1 & 0 & 0 \\ 1 & 1 & 1 & 0 & 0 & 1 & 0 \\ 1 & 0 & 1 & 0 & 0 & 0 & 1 \end{bmatrix}$$

and

$$H = \begin{bmatrix} 1 & 0 & 0 & 1 & 0 & 1 & 1 \\ 0 & 1 & 0 & 1 & 1 & 1 & 0 \\ 0 & 0 & 1 & 0 & 1 & 1 & 1 \end{bmatrix}$$

The correspondence between the user data words and the code words obtained by the coding operation can also be represented in table form as follows.

| | source | code | | source | code |
|---|---|---|---|---|---|
| i | $\bar{u}$ | $\overline{w}$ | i | $\bar{u}$ | $\overline{w}$ |
| 0 | 0000 | 0000000 | 8 | 1000 | 1000101 |
| 1 | 0001 | 0001011 | 9 | 1001 | 1001110 |
| 2 | 0010 | 0010110 | 10 | 1010 | 1010011 |
| 3 | 0011 | 0011101 | 11 | 1011 | 1011000 |
| 4 | 0100 | 0100111 | 12 | 1100 | 1100010 |
| 5 | 0101 | 0101100 | 13 | 1101 | 1101001 |
| 6 | 0110 | 0110001 | 14 | 1110 | 1110100 |
| 7 | 0111 | 0111010 | 15 | 1111 | 1111111 |

The distance of this code, i.e. the length of the error identification and correction words is 3.

The code is thus able to correct individual errors.

If to the user data word is added another parity control digital signal (even parity) on the code words there is obtained a correspondence such as that shown in the following table.

| | | source | code | | source | code |
|---|---|---|---|---|---|---|
| i | $\bar{u}$ | $\overline{w}{}^{*}$ | i | $\bar{u}$ | $\overline{w}{}^{*}$ |
| 0 | 0000 | 00000000 | 8 | 1000 | 11000101 |
| 1 | 0001 | 10001011 | 9 | 1001 | 01001110 |
| 2 | 0010 | 10010110 | 10 | 1010 | 01010011 |
| 3 | 0011 | 00011101 | 11 | 1011 | 11011000 |
| 4 | 0100 | 00100111 | 12 | 1100 | 11100010 |
| 5 | 0101 | 10101100 | 13 | 1101 | 01101001 |
| 6 | 0110 | 10110001 | 14 | 1110 | 01110100 |
| 7 | 0111 | 00111010 | 15 | 1111 | 11111111 |

In this case the new parity matrix assumes the expression:

$$H = \begin{bmatrix} 1 & 0 & 0 & 1 & 0 & 1 & 1 & 0 \\ 0 & 1 & 0 & 1 & 1 & 1 & 0 & 0 \\ 0 & 0 & 1 & 0 & 1 & 1 & 1 & 0 \\ 1 & 1 & 1 & 1 & 1 & 1 & 1 & 1 \end{bmatrix}$$

which gives rise to the following form of a vector denominated 'syndrome' which is calculated by the parity control block L1.

$$H^{*} \bullet \left(\overline{w}^{*}\right)^{T} = (\bar{s})^{T} = \begin{bmatrix} s0 \\ s1 \\ s2 \\ s3 \end{bmatrix}$$

An individual error necessarily alters the parity and hence produces a syndrome vector characterized in that it has the component S3 equal to 1.

In this type of case the data associated with the remaining components of the syndrome vector allows making the error correction by using appropriate algorithms whose structure depends on how the code is generated.

In the case in point the coding has been done so as to generate the code in a systematic and cyclic form.

A double error on the other hand leaves the component S3 of the syndrome vector at zero but produces at least a 1 on the remaining components so that the error can be detected but not corrected.

Supposing it is wanted to memorize the user data word $\bar{u}$=(0101), the identification and error correction word associated therewith is $\bar{u}_{ceck}$=(100), to which corresponds a code word $\bar{w}$=0101100). Adding the overall parity control digital signal we find $\bar{w}^{*}{}_{R}$=(10101100).

If a modellable error occurs with the so-called 'error pattern' of the type $\bar{e}$=(00001000) the reconstructed word is $\bar{w}^{*}{}_{R}$= (10100100) which produces the syndrome vector $\bar{s}$=(1011).

The first component of the vector informs that an individual error has occurred while the remaining three components allow its correction.

If on the other hand the error pattern associated with the error has for example the form $\bar{e}$=(01000001), the

syndrome vector is $\bar{s}=(0100)$.

In this case the first component of the vector informs that an incorrigible double error has occurred.

Indeed, proceeding with the same algorithm employed for correcting the individual error one would reach the word (1101001) which belongs to the code but is not the starting word.

**Claims**

1. A memory device comprising:

   - at least one first (M1) and one second (M2) memory cell array for storage respectively of a first plurality of user data and a second plurality of error identification and correction data;
   - first (D1) and second (D2) decoding means connected respectively to the first (M1) and second (M2) memory cell array for selection and reading respectively of the first and second pluralities of data;
   - error identification means (L1) coupled to said first (D1) and second (D2) decoder means;
   - at least one logical control unit (L2) connected to the error identification means (L1) and receiving a digital signal (S3) from said error identification means (L1) if an error is detected by the error identification means (L1);

   **characterized in that** said logical control unit (L2) is connected to the second decoder means (D2) and **in that** it further comprises:

   - first error correction means (C1) connected to said error identification means (L1) ;
   - second error correction means (C2) having a first and second input connected to said first error correction means (C1) and said logical control unit (L2) and enabled after an error has been detected by the error identification means (L1), said second error correction means (C2) having an output connected with a data input/output; and
   - a coder circuit (EN) enabled by said logical control unit (L2) and having an output connected to said second decoder means (D2), said coder circuit (EN) generating an error correction code.

2. Device in accordance with claim 1 and **characterized in that** the logical control unit (L2) comprises at least one input terminal and at least one first, one second and one third output terminals.

3. Device in accordance with claim 2 and **characterized in that** the first input terminal of the logical control unit (L2) is connected to at least one output terminal of the error identification means (L1).

4. Device in accordance with claim 2 and **characterized in that** the first and third output terminals of the logical control unit (L2) are connected to inputs of the error correction means (C1,C2,EN).

5. Device in accordance with claim 2 and **characterized in that** the second output terminal of the logical control unit (L2) is connected to inputs of the second decoder means (D2).

6. A method for error identification and correction in a memory device comprising:

   - at least one first (M1) and one second (M2) memory cell array for storage respectively of a first plurality of user data and a second plurality of error identification and correction data;
   - first (D1) and second (D2) decoding means connected respectively to the first (M1) and second (M2) memory cell array for selection and reading respectively of the first and second pluralities of data;
   - error identification means (L1) coupled to said first (D1) and second (D2) decoder means;
   - first error correction means (C1) connected to error identification means (L1);
   - at least one logical control unit (L2) connected to the second decoder means (D2) and the error identification means (L1) and receiving a digital signal (S3) from said error identification means (L1) if an error is detected by the error identification means (L1);

     **characterized by** the steps of:

   - enabling a second error correction means (C2) through said first error correction means (C1) and said logical control unit (L2) after an error has been detected by the error identification means (L1),
   - connecting said second error correction means (C2) with a data input/output; and

- enabling with said logical control unit (L2) a coder circuit (EN) to generate an error correction code and connecting the coder circuit (EN) to said second decoder means (D2).

**Patentansprüche**

1. Speichervorrichtung, umfassend:

   - mindestens ein erstes (M1) und ein zweites (M2) Speicherzellenarray zur Speicherung einer ersten Mehrzahl von Benutzerdaten bzw. einer zweiten Mehrzahl von Fehlererkennungs- und -korrekturdaten;
   - eine erste (D1) und eine zweite (D2) Decodiereinrichtung, die an das erste (M1) bzw. das zweite (M2) Speicherzellenarray angeschlossen sind zum Auswählen und Lesen der ersten bzw. der zweiten Mehrzahl von Daten;
   - eine Fehlererkennungseinrichtung (L1), die an die erste (D1) und die zweite (D2) Decodiereinrichtung gekoppelt ist;
   - mindestens eine logische Steuereinheit (L2), die an die Fehlererkennungseinrichtung (L1) angeschlossen ist und ein digitales Signal (S3) von der Fehlererkennungseinrichtung (L1) empfängt, wenn von der Fehlererkennungseinrichtung (L1) ein Fehler nachgewiesen ist;

   **dadurch gekennzeichnet, daß** die logische Steuereinheit (L2) an die zweite Decodiereinrichtung (D2) angeschlossen ist, und daß sie außerdem aufweist:

   - eine erste Fehlerkorrektureinrichtung (C1), die an die Fehlererkennungseinrichtung (L1) angeschlossen ist;
   - eine zweite Fehlerkorrektureinrichtung (C2) mit einem ersten und einem zweiten Eingang, die an die erste Fehlerkorrektureinrichtung (C1) und die logische Steuereinheit (L2) angeschlossen sind und freigegeben werden, nachdem von der Fehlererkennungseinrichtung (L1) ein Fehler nachgewiesen wurde, wobei die zweite Fehlerkorrektureinrichtung (C2) einen Ausgang besitzt, der mit einem Daten-Eingang/-Ausgang verbunden ist; und
   - eine Codierschaltung (EN), die von der logischen Steuereinheit (L2) freigegeben wird und mit einem Ausgang an die zweite Decodiereinrichtung (D2) angeschlossen ist, wobei die Codierschaltung (EN) einen Fehlerkorrekturcode erzeugt.

2. Vorrichtung nach Anspruch 1, **dadurch gekennzeichnet, daß** die logische Steuereinheit (L2) mindestens einen Eingangsanschluß und mindestens einen ersten, einen zweiten und einen dritten Ausgangsanschluß besitzt.

3. Vorrichtung nach Anspruch 2, **dadurch gekennzeichnet, daß** der erste Eingangsanschluß der logischen Steuereinheit (L2) an mindestens einen Ausgangsanschluß der Fehlererkennungseinrichtung (L1) angeschlossen ist.

4. Vorrichtung nach Anspruch 2, **dadurch gekennzeichnet, daß** der erste und der dritte Ausgangsanschluß der logischen Steuereinheit (L2) an die Eingänge der Fehlerkorrektureinrichtung (C1, C2, EN) angeschlossen sind.

5. Vorrichtung nach Anspruch 2, **dadurch gekennzeichnet, daß** der zweite Ausgangsanschluß der logischen Steuereinheit (L2) an Eingänge der zweiten Decodiereinrichtung (D2) angeschlossen ist.

6. Verfahren zur Fehlererkennung und -korrektur in einer EEPROM-Speichervorrichtung, umfassend:

   - mindestens ein erstes (M1) und ein zweites (M2) Speicherzellenarray zur Speicherung einer ersten Mehrzahl von Benutzerdaten bzw. einer zweiten Mehrzahl von Fehlererkennungs- und -korrekturdaten;
   - einer erste (D1) und eine zweite (D2) Decodiereinrichtung, die an das erste (M1) bzw. das zweite (M2) Speicherzellenarray angeschlossen sind zum Auswählen und Lesen der ersten bzw. der zweiten Mehrzahl von Daten;
   - eine Fehlererkennungseinrichtung (L1), die an die ersten (D1) und die zweite (D2) Decodiereinrichtung gekoppelt ist;
   - eine erste Fehlerkorrektureinrichtung (C1), die an die Fehlererkennungseinrichtung (L1) angeschlossen ist;
   - mindestens eine logische Steuereinheit (L2), die an die zweite Decodiereinrichtung (D2) und die Fehlererkennungseinrichtung (L1) angeschlossen ist, und die ein digitales Signal (S3) von der Fehlererkennungseinrichtung (L1) empfängt, wenn von der Fehlererkennungseinrichtung (L1) ein Fehler nachgewiesen wird,

**gekennzeichnet durch** folgende Schritte:

- Freigeben der zweiten Fehlerkorrektureinrichtung (C2) **durch** die erste Fehlerkorrektureinrichtung (C1) und die logische Steuereinheit (L2), nachdem von der Fehlererkennungseinrichtung (L1) ein Fehler nachgewiesen wurde,
- Verbinden der zweiten Fehlerkorrektureinrichtung (C2) mit einem Dateneingang/-ausgang; und
- Freigeben einer Codierschaltung (EN) mit der logischen Steuereinheit (L2), um einen Fehlerkorrekturcode zu generieren, und Verbinden der Codierschaltung (EN) mit der zweiten Decodiereinrichtung (D2).

**Revendications**

1. Dispositif de mémoire flash comprenant :

- au moins une première (M1) et une seconde (M2) matrice de cellules de mémoire pour le stockage respectivement d'une première pluralité de données utilisateur et d'une seconde pluralité de données d'identification et de correction d'erreurs ;
- des premiers (D1) et seconds (D2) moyens de décodage reliés respectivement à la première (M1) et à la seconde (M2) matrice de cellules de mémoire pour la sélection et la lecture respectivement de la première et de la seconde pluralité de données ;
- des moyens d'identification d'erreurs (L1) couplés audits premiers (D1) et seconds (D2) moyens de décodeur ;
- au moins une unité de contrôle logique (L2) reliée aux moyens d'identification d'erreurs (L1) et recevant un signal numêrique (S3) provenant desdits moyens d'identification d'erreurs (L1) si une erreur est détectée par les moyens d'identification d'erreurs (L1) ;

    **caractérisé en ce que** ladite unité de contrôle logique (L2) est reliée aux seconds moyens de décodeur (D2) et **en ce qu'**il comprend en outre :.

- des premiers moyens de correction d'erreurs (C1) reliés audits moyens d'identification d'erreurs (L1) ;
- des seconds moyens de correction d'erreur (C2) présentant une première et une seconde entrée, reliées audits premiers moyens de correction d'erreurs (C1) et à ladite unité de contrôle logique (L2) et activés après la détection d'une erreur par les moyens d'identification d'erreurs (L1), lesdits seconds moyens de correction d'erreurs (C2) présentant une sortie reliée à une entrée/sortie de données ; et
- un circuit de codage (EN) activé par ladite unité de contrôle logique (L2) et présentant une sortie reliée audits seconds moyens de décodeur (D2), ledit circuit de codage (EN) générant un code de correction d'erreur.

2. Dispositif selon la revendication 1, **caractérisé en ce que** l'unité de contrôle logique (L2) comprend au moins un terminal d'entrée et au moins un premier, un second et un troisième terminal de sortie.

3. Dispositif selon la revendication 2, **caractérisé en ce que** le premier terminal d'entrée de l'unité de contrôle logique (L2) est relié à au moins un terminal de sortie des moyens d'identification d'erreur (L1).

4. Dispositif selon la revendication 2, **caractérisé en ce que** le premier et le troisième terminal de sortie de l'unité de contrôle logique (L2) sont reliés aux entrées des moyens de correction d'erreurs (C1, C2, EN).

5. Dispositif selon la revendication 2, **caractérisé en ce que** le second terminal de sortie de l'unité de contrôle logique (L2) est relié aux entrées des seconds moyens de décodeur (D2).

6. Procédé pour l'identification et la correction des erreurs dans un dispositif de mémoire EEPROM comprenant :

- au moins une première (M1) et une seconde (M2) matrice de cellules de mémoire pour le stockage respectivement dune première pluralité de données utilisateur et d'une seconde pluralité de données d'identification et de correction d'erreurs ;
- des premier (D1) et second (D2) moyens de décodeur reliés respectivement à une première (M1) et une seconde (M2) matrice de cellules de mémoire pour la sélection et la lecture respectivement de la première et de la seconde pluralité de données ;
- des moyens d'identification d'erraurs (L1) couplés audits premiers (D1) et seconds (D2) moyens de décodeur ;
- des premiers moyens de correction d'erreurs (C1) reliés aux moyens d'identification d'erreurs (L1) ;

- au moins une unité de contrôle logique (L2) reliée aux seconds moyens de décodeur (D2) et aux moyens d'identification d'erreurs (L1) et recevant un signal numérique (S3) provenant desdits moyens d'identification d'erreurs (L1) si une erreur est détectée par les moyens d'identification d'erreurs (L1) **caractérisé par** les étapes consistant à :

  - activer des seconds moyens de correction d'erreur (C2) par lesdits premiers moyens de correction d'erreurs (C1) et ladite unité de contrôle logique (L2) agrès la détection d'une erreur par les moyens d'identification d'erreurs (L1) ;
  - relier lesdits seconds moyens de correction d'erreurs (C2) à l'entrée/sortie de données ; et
  - activer avec ladite unité de contrôle logique (L2) un circuit de codage (EN) pour générer un code de correction d'erreurs et relier le circuit de codage (EN) audits second moyens de décodeur (D2).

Fig. 1

$V_{TLp}$ Voltage threshold of programmed cell

$V_{TLv}$ Voltage threshold of non-programmed cell

Fig. 2

Fig. 3